# EUROPEAN PATENT SPECIFICATION

(11) **EP 0 503 553 B1**
(45) Date of publication and mention of the grant of the patent: **07.02.1996**
(21) Application number: 92104054.9
(22) Date of filing: 10.03.1992
(51) Int. Cl.: G21C 3/356, G21C 3/344

(54) **Spacer for retaining fuel rods in a nuclear reactor fuel assembly**
Abstandshalter zum Festhalten von Brennstäben in einem Kernreaktorbrennstabbündel
Dispositif d'espacement et de maintien de barreaux de combustible dans un assemblage combustible de réacteur nucléaire

(30) Priority: 13.03.1991 SE 9100753
(43) Date of publication of application: 16.09.1992
(73) Proprietor: ABB ATOM AB, S-721 83 Västeras (SE)
(72) Inventor: Mansson,Ragnar, S-723 51 Västeras (SE); Farkas, Tibor, S-723 48 Västeras (SE); Nylund, Olov, S-721 17 Västeras (SE)
(74) Representative: Boecker, Joachim, Dr.-Ing.

(56) References cited:
- EP-A- 0 025 395
- DE-A- 1 589 463
- DE-A- 1 944 932
- FR-A- 2 457 544
- US-A- 3 746 619

## Description

The invention relates to a spacer for retaining fuel rods in a nuclear reactor fuel assembly according to the precharacterising part of claim 1.

It is important that these spacers, which are placed spaced from each other along the bundle, do not form too high a resistance to the coolant flow which flows inside the fuel assembly along the bundle and through the spacers.

There are known spacers in which the cells of the spacer are formed from tubular sleeves which are composed into a socalled spacer grid for positioning the fuel rods extending through the sleeves. Each sleeve has been internally provided with fixed supports and spring means for pressing the fuel rod extending through the sleeve against said supports and thus fixing the position of the fuel rod. The spring means is formed as a leaf spring cut out of the wall of the sleeve. Also, when a fuel rod is in position in the tubular sleeve, the leaf spring belonging to this sleeve still extends for the most part into the sleeve. A considerable part of the free space between the fuel rod and the sleeve is then occupied by the leaf spring. This increases the unwanted flow resistance through the spacer.

The FR-A-2 457 544 describes a spacer with square shaped cells formed by crosswise arranged straight strips of sheet. Cut out from the cell walls are leaf springs which emerge with their base from the cell wall and are slightly bent towards the centre of the cell. When a fuel rod is inserted the planes of the springs are mainly pressed back into the plane of the cell wall except for the portions at the free ends of the leaf springs which contact the fuel rod. The leaf springs are oriented in the axial direction of the spacer. Since the planes of these contact portions are inclined relative to the flow direction of the coolant they form a relatively large blocking area in the flow direction of the coolant the size of which increases with the size of the contact surface. A similarly designed spacer is known from the EP-A-0 025 395.

The DE-A-1 589 463 describes a spacer the cells of which consist of tubular sleeves. To the inner side wall of each sleeve there is connected in axially oriented leaf spring for positioning of the fuel rods. This leaf spring provides a considerably resistance to the coolant flow between the cell wall and fuel rod partly because it is entirely arranged in this small circular gap and partly because its plane and its contact portions are more or less inclined to the direction of the cooling flow.

The invention aims at developing a spacer for retaining fuel rods in a nuclear reactor fuel assembly of the abovementioned kind which exhibits a reduced flow resistance.

To achieve this aim the invention suggests a spacer for retaining fuel rods in a nuclear reactor fuel assembly according to the introductory part of claim 1, which is characterized by the features of the characterizing part of claim 1.

Further developments of the invention are characterized by the features of the additional claims.

According to the invention, the increased flow resistance caused by the leaf spring is substantially avoided in that the leaf spring, in tensioned position when the fuel rod is inserted into the sleeve, is returned by the fuel rod to a position in which the leaf spring substantially coincides with the wall of the sleeve. In this way, the space between the fuel rod and the sleeve is almost entirely freed from the flow-preventing effect of the spring means.

According to a particularly suitable embodiment, the spring means is formed from a leaf spring which is cut out of the wall of the sleeve and extends transversally in relation to the longitudinal axis of the sleeve. The respective sleeve is then suitably internally provided with at least one first pair of laterally separated fixed supports at one level in the sleeve and a second, similarly arranged, pair of laterally separated fixed supports at another level in the sleeve. The spring means is arranged opposite to the fixed supports such that it makes contact with a fuel rod, inserted into the sleeve, at a point between the levels for the fixed supports.

Because the leaf spring is arranged to extend transversally in relation to the longitudinal axis of the sleeve, the leaf spring can be made sufficiently long to provide a suitably soft resilience without the need to increase the length of the sleeve, and hence the flow resistance of the spacer.

To facilitate returning the leaf spring to a position coinciding with the sleeve wall, the leaf spring is provided at its end with a contact surface which is bent out towards the centre of the sleeve.

An additional way to improve the resilience of the leaf spring is to design it to be wider at its base than at its free end.

Further, the leaf spring should be cut out with as narrow slots in the sleeve as possible to prevent lateral flow of the cooling water in the spacer.

By way of example, the invention will now be described in greater detail with reference to the accompanying drawings showing in
- Figure 1: a top view on a sleeve in a spacer according to the invention seen in the direction of the arrows A in Figure 2,
- Figure 2: a section of the sleeve taken along B-B in Figure 1,
- Figure 3,: schematically, sleeves composed into a spacer inside an outer frame.

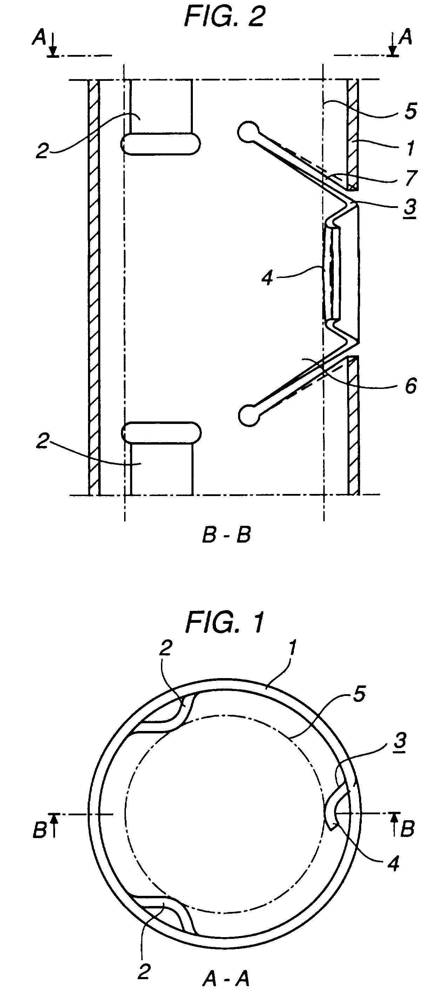

In Figure 1, numeral 1 designates a tubular sleeve which is internally provided with fixed supports 2 and a spring means 3 with a bent-out contact surface 4 which makes contact with an outlined fuel rod 5.

Figure 2 shows how the spring means 3, which consists of a leaf spring 6 with a bent-out contact surface 4, has been cut out of the wall of the sleeve 1 by means of narrow slots 7. The leaf spring 6 with the contact surface 4 is bent such that it extends into the sleeve 1 when the sleeve 1 is empty. In Figures 1 and 2 it has been assumed that a fuel rod is in position in the sleeve 1. This causes the leaf spring 6 to be bent back to a position which, according to the invention, coincides with the sleeve wall. The figures also show that the total number of the fixed supports 2 is four, two of which being arranged at an upper level and two at a lower level. The fuel rod 5 is pressed against these four fixed supports 2 by the oppositely positioned spring means 3 which abuts in tensioned state against the fuel rod 5 at a point midway between the fixed supports 2. From Figure 2 it is further clear that the leaf spring 6 cut out of the sleeve is considerably wider at its base, that is, where the leaf spring 6 is joined to the sleeve 1, than at its free end, thus obtaining improved resilience.

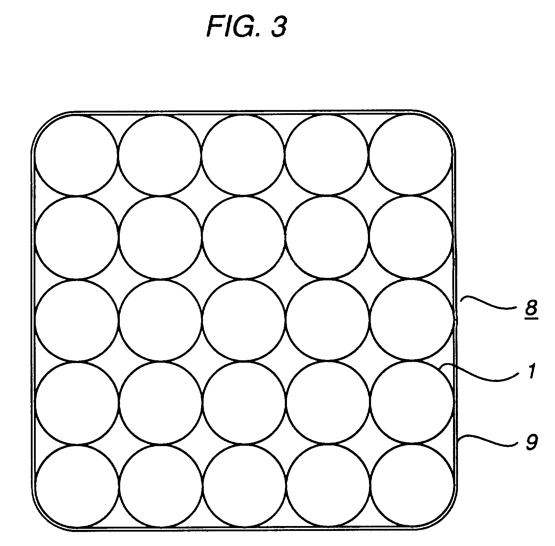

Figure 3, finally, schematically shows how the sleeves 1 have been composed to form a spacer 8 with several cells arranged inside an outer frame 9.

## Claims

1. Spacer (8) with a plurality of cells for retaining a plurality of parallel elongated fuel rods (5), extending through the cells, into a fuel rod bundle in a nuclear reactor fuel assembly, said cells being formed from tubular sleeves (1) internally provided with fixed supports (2) and at least one spring means (3) arranged opposite to said fixed supports (2), said spring means (3) being adapted to be pushed into tensioned state through contact with a fuel rod (5) inserted into a sleeve (1) and being formed as a leaf spring (6) which is cut out of the wall of the sleeve (1) and which, when the sleeve (1) is empty, extends into the inner space of the sleeve (1), **characterized** in that said leaf spring (6) extends transversally in relation to the longitudinal axis of the sleeve (1) and that the leaf spring (6) in tensioned position, when the fuel rod (5) is inserted into the sleeve (1), is resting in a position substantially coinciding with the wall of the sleeve (1).

2. Spacer according to claim 1 with the respective sleeve (1) internally provided with at least one first pair of laterally separated fixed supports (2) at one level in the sleeve (1) and a second, similarly arranged, pair of laterally separated fixed supports (2) at another level in the sleeve (1), **characterized** in that said spring means (3) is arranged opposite to said fixed supports (2) to make contact with a fuel rod (5), inserted into the sleeve (1), at a point between the levels for the fixed supports (2).

3. Spacer according to claim 1 or 2, **characterized** in that the leaf spring (6) is provided at its free end with a contact surface (4) bent out towards the centre of the sleeve (1).

4. Spacer according to any of the preceding claims, **characterized** in that the leaf spring (6) is made wider at its base than at its free end.

5. Spacer according to any of the preceding claims, **characterized** in that the leaf spring (6) has been cut out of the sleeve (1) by means of very narrow slots (7).

## Patentansprüche

1. Abstandshalter (8) mit einer Vielzahl von Zellen zum Zusammenhalten einer Vielzahl von parallelen, langgestreckten und sich durch die Zellen erstreckenden Brennstäben (5) in einem Brennstabbündel eines Brennelementes für einen Kernreaktor, wobei die Zellen von rohrförmigen Hülsen (1) gebildet werden, die auf ihrer Innenseite mit festen Stützen (2) und mindestens einer Federvorrichtung (3), die gegenüber den festen Stützen (2) angeordnet ist, versehen sind, wobei die Federvorrichtung (3) so beschaffen ist, daß sie durch einen in die Hülse (1) eingeführten Brennstab (5) in den gespannten Zustand gedrückt wird, und wobei die Federvorrichtung als Blattfeder (6) ausgebildet ist, die aus der Wand der Hülse (1) ausgeschnitten ist und die, wenn die Hülse (1) leer ist, in den inneren Raum der Hülse (1) hineinragt, **dadurch gekennzeichnet**, daß die Blattfeder (6) sich quer im Verhältnis zur Längsachse der Hülse (1) erstreckt und daß die Blattfeder (6) im gespannten Zustand, wenn ein Brennstab (5) in die Hülse (1) eingeführt ist, sich in einer Lage befindet, die im wesentlichen mit der Wand der Hülse (1) zusammenfällt.

2. Abstandshalter nach Anspruch 1, bei dem die jeweilige Hülse (1) innen mindestens mit einem ersten Paar seitlich getrennter fester Stützen (2) auf einem ersten Niveau der Hülse (1) versehen ist und mit einem zweiten ähnlich angeordneten Paar seitlich getrennter fester Stützen (2) auf einem zweiten Niveau der Hülse 1 versehen ist, **dadurch gekennzeichnet**, daß die Federvorrichtung (3) den festen Stützen (2) gegenüber liegend derart angeordnet ist, daß sie mit einem in die Hülse (1) eingeführten Brennstab (5) in einem Punkte zwischen den Niveaus der festen Stütze (2) in Kontakt steht.

3. Abstandshalter nach einem der Ansprüche 1 oder 2, **dadurch gekennzeichnet**, daß die Blattfeder (6) an ihrem freien Ende mit einer Kontaktfläche (4) versehen ist, die in Richtung zum Zentrum der Hülse (1) abgebogen ist.

4. Abstandshalter nach einem der vorhergehenden Ansprüche, **dadurch gekennzeichnet** daß die Blattfeder (6) an ihrer Basis breiter ist als an ihrem freien Ende.

5. Abstandshalter nach einem der vorhergehenden Ansprüche, **dadurch gekennzeichnet**, daß die Blattfeder (6) mittels schmaler Schlitze (7) aus der Hülse (1) ausgeschnitten ist.

## Revendications

1. Entretoise (8) comportant une pluralité de cellules destinées à maintenir une pluralité de crayons (5) combustibles oblongs parallèles, qui s'étendent dans les cellules, en un faisceau de crayons combustibles dans un assemblage combustible de réacteur nucléaire, ces cellules étant formées de gaines (1) tubulaires qui sont munies en leur intérieur de supports (2) fixes et d'au moins un moyen (3) à ressort disposé à l'opposé des supports (2) fixes, ce moyen (3) à ressort étant adapté pour être poussé dans un état de tension par contact avec un crayon (5) combustible inséré dans une gaine (1) et étant formé comme un ressort (6) à lames qui est découpé de la paroi de la gaine (1) et qui, lorsque la gaine (1) est vide, s'étend dans la région intérieure de la gaine (1), caractérisée en ce que le ressort (6) à lame s'étend transversalement par rapport à l'axe longitudinal de la gaine (1) et en ce que le ressort (6) à lame en position sous tension, lorsque le crayon (5) combustible est inséré dans la gaine (1), repose dans une position qui coïncide sensiblement avec la paroi de la gaine (1).

2. Entretoise suivant la revendication 1, chaque gaine (1) étant munie d'au moins une première paire de supports (2) fixes distincts latéralement à un niveau de la gaine (1) et une seconde paire, disposées de manière similaire, de supports (2) fixes distincts latéralement à un autre niveau de la gaine (1), caractérisée en ce que le moyen (3) à ressort est disposé opposé aux supports (2) fixes pour établir un contact avec un crayon (5) combustible, qui est inséré dans la gaine (1), en un point situé entre les deux niveaux de supports (2) fixes.

3. Entretoise suivant la revendication 1 ou 2, caractérisée en ce que le ressort (6) à lame est muni à son extrémité libre d'une surface (4) de contact courbée vers le centre de la gaine (1).

4. Entretoise suivant l'une quelconque des revendications précédentes, caractérisée en ce que le ressort (6) à lame est réalisé plus large à sa base qu'à son extrémité libre.

5. Entretoise suivant l'une quelconque des revendications précédentes, caractérisée en ce que le ressort (6) à lame a été découpé de la gaine (1) sous forme d'encoches (7) très étroites.
